Europäisches Patentamt

European Patent Office

Office européen des brevets

(19)

(11) **EP 0 631 111 B1**

(12) **FASCICULE DE BREVET EUROPEEN**

(45) Date de publication et mention
de la délivrance du brevet:
**06.08.1997 Bulletin 1997/32**

(51) Int Cl.[6]: **G01C 21/00**, F41G 7/34

(21) Numéro de dépôt: **94401318.4**

(22) Date de dépôt: **13.06.1994**

(54) **Procédé et dispositif pour déterminer la position d'un aéronef**

Verfahren und Vorrichtung zum Bestimmen der Position eines Flugkörpers

Procedure and device for determining the position of an aircraft

(84) Etats contractants désignés:
**BE CH DE ES GB GR IT LI NL PT SE**

(30) Priorité: **22.06.1993 FR 9307543**

(43) Date de publication de la demande:
**28.12.1994 Bulletin 1994/52**

(73) Titulaire: **AEROSPATIALE Société Nationale
Industrielle
75781 Paris Cédex 16 (FR)**

(72) Inventeur: **Laures, Pierre
F-92260 Chatenay Malabry (FR)**

(74) Mandataire: **Bonnetat, Christian
CABINET BONNETAT
29, rue de St. Pétersbourg
75008 Paris (FR)**

(56) Documents cités:
**EP-A- 0 436 213** **DE-A- 3 446 009**
**FR-A- 2 642 529** **US-A- 4 695 959**

**Description**

La présente invention concerne un procédé et un dispositif pour déterminer la position d'un aéronef. L'invention peut être mise en oeuvre uniquement pour déterminer la position dudit aéronef, ou bien encore pour assurer la navigation dudit aéronef et/ou le guidage de ce dernier vers une cible, par exploitation des informations concernant ladite position.

Bien que pouvant être utilisée pour toutes sortes d'aéronefs (avions, hélicoptères, ...), la présente invention est particulièrement adaptée aux missiles, et notamment aux missiles de surveillance, aux drones de reconnaissance et aux missiles destinés à détruire des cibles à grande distance.

On sait que les dispositifs connus de positionnement ou de navigation pour aéronefs comportent au moins une centrale inertielle mettant en oeuvre des gyromètres et des accéléromètres de haute précision, dès que le temps de vol est important. De plus, en cas de navigation à basse altitude en suivi de terrain, il est nécessaire de prévoir des altimètres ou un radar détecteur d'obstacles. Il en résulte que ces dispositifs connus sont onéreux.

L'objet de la présente invention est de déterminer la position, la vitesse et l'attitude d'un aéronef, afin de permettre la navigation et/ou le guidage dudit aéronef sans utilisation d'une coûteuse centrale inertielle.

A cette fin, selon l'invention, le procédé pour déterminer les positions successives d'un aéronef en mouvement, à chacun des instants d'une pluralité d'instants successifs espacés les uns des autres d'une durée $\Delta t$, en mettant en oeuvre une caméra disposée dans l'axe dudit aéronef et observant le paysage en avant de ce dernier, est remarquable en ce que, à un tel instant $\underline{ti}$ pour lequel l'aéronef occupe une position Pi, dans le plan image de ladite caméra :

- on détermine les coordonnées de l'image $\underline{m}$ d'un point remarquable M du paysage ;
- on détermine les coordonnées de l'image $\underline{mi}$ d'un point fictif Mi, défini par le fait que le vecteur $\overrightarrow{MMi}$ est équipollent au vecteur $\overrightarrow{Pi\text{-}1\,Pi}$, Pi-1 étant la position de l'aéronef à l'instant ti-1 ;
- on détermine les coordonnées du point d'intersection $\underline{fi}$ entre ledit plan image et une droite passant par ladite position Pi et parallèle au vecteur vitesse $\vec{V}$ dudit aéronef, déterminé lors d'une mesure à un desdits instants précédents $\underline{ti}$ ;
- on détermine la vitesse axiale dudit aéronef ; et
- à partir desdites coordonnées des images dudit point remarquable et dudit point fictif et des coordonnées dudit point d'intersection, ainsi que de ladite vitesse axiale et de ladite durée $\Delta t$, on calcule, dans un référentiel lié audit aéronef, les coordonnées dudit point remarquable M, ainsi que les composantes dudit vecteur vitesse $\vec{V}$, a l'instant $\underline{ti}$, dans un référentiel lié au missile.

Pour la mise en oeuvre du procédé conforme à la présente invention, on utilise avantageusement une caméra sensible à un rayonnement infrarouge ou visible, comportant dans son plan focal (plan image) une matrice de photodétecteurs (par exemple des capteurs CCD), qui permet d'obtenir une représentation du paysage, compatible avec un système de traitement de l'information. On sait qu'il existe déjà de telles caméras sensibles à des rayonnements de longueurs d'onde variées (rayonnement visible, de 3 à 5 $\mu$m, de 8 à 12 $\mu$m). Elles ont généralement des angles d'ouverture de l'ordre de 10 à 20° et leur matrice photosensible comporte de nombreux photodétecteurs, par exemple 512 x 512. De telles caméras sont largement utilisées dans les dispositifs de navigation et de guidage des missiles de reconnaissance et elles permettent d'obtenir des images vidéo du paysage à des fréquences de l'ordre de 25 Hz. Grâce à une telle caméra, on peut donc mesurer, sur ladite matrice de photodétecteurs, les coordonnées de l'image dudit point remarquable M du paysage, par exemple un point "chaud" de celui-ci.

Pour déterminer les coordonnées dudit point remarquable à l'instant $\underline{ti}$, on commence par mesurer, dans ledit plan image, à l'instant précédent ti-1, les coordonnées de l'image dudit point remarquable M du paysage, puis on intègre l'équation du mouvement de ce point dans le système de référence de l'aéronef pour obtenir une position estimée $\underline{m^*}$ de l'image dudit point remarquable à l'instant $\underline{ti}$. De façon connue (voir par exemple le document DE-A-3 446 009), cette équation de mouvement est du type :

$$\dot{\vec{X}} = -\ \vec{V}\ -\ \vec{\Omega}\ \wedge\ \vec{X}$$

dans laquelle :

- $\vec{X}$ est le vecteur des coordonnées X, Y et Z de l'image $\underline{m}$ du point remarquable M à l'instant ti-1 dans ledit référentiel de l'aéronef ;
- $\dot{\vec{X}}$ est la dérivée de $\vec{X}$ par rapport au temps ;
- $\vec{V}$ est le vecteur vitesse de l'aéronef, de composantes $\underline{u}$, $\underline{v}$ et $\underline{w}$ dans ledit référentiel de l'aéronef ; et
- $\vec{\Omega}$ est le vecteur rotation instantanée de l'aéronef, dont les composantes $\underline{p}$, $\underline{q}$ et $\underline{r}$ sont mesurées à bord dudit aéronef.

Le vecteur $\vec{\Omega}$ représente donc les variations d'attitude de l'aéronef autour des axes de roulis, de tangage et de lacet de celui-ci. Pour le mesurer, il suffit de monter trois gyromètres à bord dudit aéronef, chacun desdits gyromètres étant associé à l'un desdits axes. L'intégration de l'équation de mouvement peut s'effectuer à la cadence des mesures des composantes $\underline{p}$, $\underline{q}$ et $\underline{r}$ du vecteur $\vec{\Omega}$ par les gyromètres. Cette intégration peut être faite par la mise en oeuvre d'une méthode connue, telle que celle de RUNGE KUTTA.

De préférence, afin d'obtenir la position vraie de l'image dudit point remarquable à l'instant $\underline{ti}$, on mémorise une portion de l'image entourant l'image $\underline{m}$ dudit point remarquable M à l'instant ti-1 et on effectue une corrélation avec une portion d'image autour de la position estimée $\underline{m^*}$ en recherchant la position qui donne le maximum de corrélation et qui définit de ce fait la position vraie de l'image du point M dans ledit plan image.

On remarquera que le système différentiel permettant de prévoir la position estimée $\underline{m^*}$ peut s'écrire

$$\dot{X} = - u + (ry - qz) X$$

$$\dot{y}X + y\dot{X} = - v + (pz-r) X$$

$$\dot{z}X + z\dot{X} = - w + (q-pq) X$$

et ne fait intervenir, outre les quantités mesurées, que les estimations de $\underline{u}$, $\underline{v}$, $\underline{w}$ et X.

La position de la portion d'image entourant le point M à l'instant ti-1 peut être estimée sur plusieurs points, ce qui permet d'affiner la corrélation en tenant compte de la rotation de l'image et de son grossissement pendant le déplacement de l'aéronef entre les instants ti-1 et $\underline{ti}$.

On obtient ainsi les coordonnées $\underline{y}$ et $\underline{z}$ de l'image $\underline{m}$ du point remarquable M, à l'instant $\underline{ti}$, dans le plan image de la caméra.

Pour la détermination des coordonnées de l'image $\underline{mi}$ dudit point fictif Mi, il est important de remarquer, puisque les vecteurs $\overrightarrow{MMi}$ et $\overrightarrow{Pi\text{-}1\,Pi}$ sont égaux, que les vecteurs $\overrightarrow{Pi\text{-}1\,M}$ et $\overrightarrow{Pi\,Mi}$ le sont aussi. La direction $\overrightarrow{Pi\text{-}1\,M}$ est conservée entre les instants ti-1 et $\underline{ti}$ et la vitesse du point fictif Mi est donc nulle par rapport à l'aéronef.

Par suite, pour déterminer les coordonnées de l'image $\underline{mi}$ dudit point fictif Mi, on peut, connaissant les coordonnées de l'image $\underline{m}$ dudit point remarquable M à l'instant ti-1 obtenues comme mentionné ci-dessus, intégrer une équation de mouvement simplifiée, du type :

$$\dot{\overrightarrow{Xo}} = \vec{\Omega} \wedge \overrightarrow{Xo}$$

dans laquelle :

- $\overrightarrow{Xo}$ est le vecteur des coordonnées Xo, Yo et Zo de l'image m du point remarquable M à l'instant ti-1 dans ledit référentiel de l'aéronef ;
- $\dot{\overrightarrow{xo}}$ est la dérivée de $\overrightarrow{Xo}$ par rapport au temps ; et
- $\vec{\Omega}$ est le vecteur rotation instantanée, défini ci-dessus.

Le système d'équations à intégrer s'écrit alors

$$\dot{y}o + yo\,(ryo - qzo) = pzo - r$$

$$\dot{z}o + zo\,(ryo - qzo) = q - pyo$$

Il ne fait intervenir que des valeurs mesurables, à l'exclusion de Xo, $\underline{u}$, $\underline{v}$ et $\underline{w}$. La précision de pointage de ce point ne dépend donc que de la précision des gyromètres.

On obtient ainsi les coordonnées de l'image $\underline{mi}$ dudit point fictif Mi, à l'instant $\underline{ti}$, dans le plan image de la caméra.

Par suite, connaissant les coordonnées des images $\underline{m}$ et $\underline{mi}$ de la façon indiquée ci-dessus, on connaît les composantes $\alpha$ et $\beta$ du vecteur image $\overrightarrow{mmi}$, dans le plan image de la caméra, à l'instant $\underline{ti}$.

Comme on le verra ci-après, le point d'intersection $\underline{fi}$, à l'instant $\underline{ti}$, doit se trouver sur le vecteur image $\overrightarrow{mmi}$ dans le plan image. Par suite, pour déterminer les coordonnées dudit point d'intersection, on peut utiliser deux méthodes différentes.

Selon une première méthode, on détermine au moins deux vecteurs image $\overrightarrow{mmi}$, correspondant à deux points remarquables M différents, et on détermine les coordonnées dudit point d'intersection $\underline{fi}$ comme celles de l'intersection desdits deux vecteurs image $\overrightarrow{mmi}$.

Selon une seconde méthode, connaissant le point d'intersection fi-1 à l'instant ti-1 (de coordonnées v/u et w/u dans le plan image), on détermine une position estimée $\underline{f^*}$ de ce point d'intersection à l'instant $\underline{ti}$ en utilisant la même technique que pour le point $\underline{mi}$ en remplaçant dans l'équation différentielle $\underline{y}$ par v/u et $\underline{z}$ par w/u. Cette estimation ne tient pas compte des variations de $\underline{u}$, $\underline{v}$ et $\underline{w}$ pendant le temps d'intégration. On projette alors le point $\underline{f^*}$ ainsi déterminé sur la droite mmi pour obtenir le point d'intersection $\underline{fi}$ à l'instant $\underline{ti}$.

La composante $\underline{u}$ de la vitesse moyenne, perpendiculairement au plan image, peut être estimée à partir de paramètres extérieurs, par exemple d'après le régime du propulseur de l'aéronef et des conditions atmosphériques, ou d'après une mesure d'accélération donnée par un accéléromètre monté dans l'axe de l'aéronef.

On déduit alors immédiatement des opérations précédentes les valeurs des composantes $\underline{u}$, $\underline{v}$ et $\underline{w}$ de la vitesse $\vec{V}$ à l'instant $\underline{ti}$, dans un référentiel lié au missile.

En outre, les coordonnées (X,Y,Z) du point remarquable M sont calculées directement à partir des expressions suivantes :

$$X = mifi/mmi.u\Delta t$$

$$Y = yX / \lambda$$

$$Z = zX / \lambda$$

dans lesquelles $y$ et $z$ sont les coordonnées de l'image $m$ du point remarquable M dans le plan image, $u$ la composante de la vitesse $\vec{V}$ selon l'axe OX, $\Delta t$ l'intervalle de temps considéré, mifi et mmi les valeurs calculées précédemment et $\lambda$ la distance focale de l'optique.

On connaît ainsi à chaque instant considéré la vitesse de l'aéronef et la position de celui-ci par rapport à un point remarquable du paysage. Ces informations peuvent en particulier être utilisées pour assurer la navigation de l'aéronef et/ou son guidage vers une cible.

On remarquera que l'on peut, afin de réaliser un flux continu de calcul, suivre N points remarquables différents du paysage en calculant simultanément leur position, à des intervalles de temps $\Delta t$. Il est ainsi possible de recaler le point $fi$ à chaque $\Delta tv$ tel que $N\Delta tv = \Delta t$.

Par ailleurs, on notera que, pour que le principe proposé soit un système complet de navigation, on doit pouvoir recaler le référentiel de l'aéronef par rapport à un référentiel géographique local. Un tel recalage permet, en outre, de calculer des ordres de guidage pour amener la trajectoire de l'aéronef sur sa trajectoire nominale. De nombreuses méthodes de recalage peuvent être utilisées.

A titre d'exemple, en connaissant à un instant donné dans le référentiel lié à l'aéronef les vecteurs $\vec{Xi}$ de N points du paysage, on peut calculer dans ce référentiel un vecteur $(a,b,1)$ représentant la normale au terrain visualisé, ce qui permet alors de positionner le référentiel géographique local, et d'en déduire des ordres de guidage si le vecteur vitesse n'est pas dans ce plan.

A cet effet, on détermine le barycentre des N points connus par $\vec{Xg} = 1/N\ \Sigma\vec{Xi}$ et on définit un plan moyen

$$a(x-xg) + b(y-yg) + (z-zg) = 0$$

qui a pour normale le vecteur $(a,b,1)$.

Les valeurs $a$ et $b$ sont calculées à partir du système

$$\Sigma i\ [a(Xi-Xg) + b(Yi-Yg) + (Zi-Zg)] = 0$$

$$\Sigma Yi\ [a(Xi-Xg) + b(Yi-Yg) + (Zi-Zg)] = 0$$

On notera que la hauteur $h$ de l'aéronef est directement obtenu par la relation

$$h = \frac{|aXg + bYg + Zg|}{\sqrt{1+a^2+b^2}}$$

La présente invention concerne également un dispositif pour la mise en oeuvre du procédé précité.

Selon l'invention, le dispositif pour déterminer les positions successives d'un aéronef en mouvement, à chacun des instants d'une pluralité d'instants successifs espacés les uns des autres d'une durée $\Delta t$, comportant

une caméra, est remarquable :

-   en ce que ladite caméra est dirigée, selon une orientation fixe par rapport audit aéronef, vers l'avant, pour détecter un point remarquable du paysage ; et
-   en ce que ledit dispositif comporte :

    .   des gyromètres pour mesurer les composantes du vecteur de rotation instantanée dudit aéronef, suivant les axes de roulis, de tangage et de lacet de celui-ci ;
    .   des moyens pour estimer la vitesse axiale dudit aéronef ; et
    .   des moyens de calcul pour déterminer, dans un référentiel lié audit aéronef, à chacun desdits instants et exclusivement à partir de mesures de coordonnées fournies par ladite caméra, desdites composantes de rotation instantanée, de ladite vitesse axiale et de la durée $\Delta t$, les coordonnées dudit point remarquable, ainsi que les composantes du vecteur vitesse de l'aéronef, à cet instant.

De façon avantageuse, lesdits moyens de calcul sont, dans leur totalité, embarqués à bord dudit aéronef.

En variante, on peut prévoir une liaison de transmission entre ledit aéronef et un poste de commande au sol et lesdits moyens de calcul peuvent être, au moins partiellement, disposés dans ledit poste de commande.

Les figures du dessin annexé feront bien comprendre comment l'invention peut être réalisée. Sur ces figures, des références identiques désignent des éléments semblables.

La figure 1 montre, de façon schématique, un aéronef pourvu d'un plan image de caméra et associé à un référentiel utilisé dans le procédé conforme à l'invention.

La figure 2 illustre le principe de détermination de la distance d'un point remarquable du paysage.

La figure 3 montre des points nécessaires pour la mise en oeuvre du procédé conforme à l'invention et situés dans un plan image.

La figure 4 illustre, de façon schématique, un dispositif pour la mise en oeuvre du procédé conforme à l'invention.

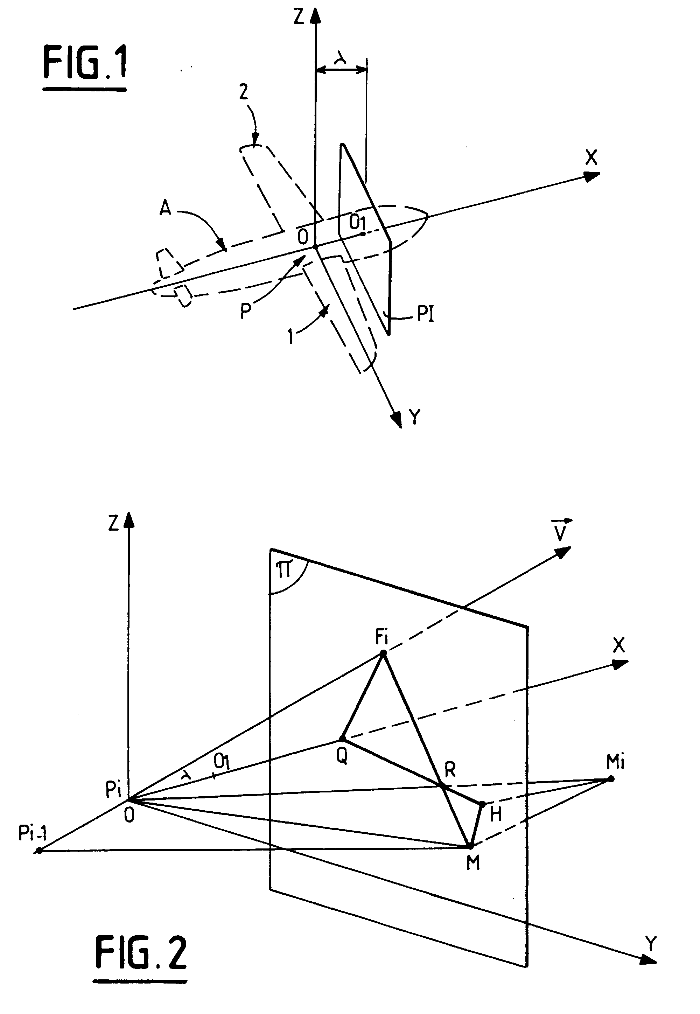

Le procédé conforme à l'invention permet de déterminer les positions successives d'un aéronef A en mouvement, à chacun des instants d'une pluralité d'instants successifs espacés les uns des autres d'une durée $\Delta t$. A cet effet, on définit un référentiel aéronef lié audit aéronef A d'axes OX, OY et OZ, dans lequel l'axe OX correspond à l'axe de l'aéronef, l'axe OY correspond à l'axe des ailes 1 et 2 dudit aéronef A et l'axe OZ est perpendiculaire à ces derniers axes OX et OY, tel que représenté sur la figure 1. Pour la mise en oeuvre du procédé conforme à l'invention, on utilise une caméra (non représentée sur la figure 1) comportant, dans son plan focal représenté par un plan image PI, une matrice de photodétecteurs. Ledit plan image PI est perpendiculaire à l'axe OX et il coupe cet axe OX en un point O1, situé à une distance λ du point O.

Le principe de la présente invention, permettant de déterminer les coordonnées X, Y et Z dans le référentiel de l'aéronef d'un point remarquable M du paysage, est illustré sur la figure 2.

Sur cette figure, on a représenté :

- les positions successives Pi-1 et Pi de l'aéronef A (considéré comme ponctuel à des fins de simplification du dessin) à des instants successifs ti-1 et $t_i$, tels que ti = ti-1 + Δt ;
- le vecteur $\vec{V}$ représentatif de la vitesse moyenne de l'aéronef A entre les positions Pi-1 et Pi ;
- un plan frontal π passant par le point remarquable M et perpendiculaire à l'axe OX, l'axe OX coupant ledit plan π en Q, qui est donc la projection orthogonale de Pi sur ce plan π ;
- un point fictif Mi tel que $\overrightarrow{MMi} = \overrightarrow{Pi\text{-}1\,Pi}$, c'est-à-dire que le segment MMi est parallèle, de même longueur et de même sens que le segment Pi-1 Pi ;
- un point H qui est la projection orthogonale du point Mi sur le plan π ;
- un point R qui est l'intersection du plan π et du segment PiMi ; et
- un point Fi auquel le vecteur $\vec{V}$ traverse le plan π.

On voit aisément que, dans le plan π, les points M, R et Fi sont alignés et qu'il en est de même des points Q, R et H. Sur la figure 2, on a tracé les segments MFi d'une part, et QH d'autre part.

De ce qui précède, on en déduit que $\overrightarrow{MMi} = \overrightarrow{Pi\text{-}1\,Pi}$ = $\vec{V}.\Delta t$, de sorte qu'en appelant $u$ la composante de la vitesse $\vec{V}$ parallèle à l'axe OX, on obtient HMi = uΔt.

Par ailleurs, le segment PiQ représente la distance X séparant la position Pi du plan π.

Les triangles rectangles PiQFi et MiHM étant semblables, on peut écrire :

$$\frac{\overrightarrow{QFi}}{\overrightarrow{MH}} = \frac{\overrightarrow{PiQ}}{\overrightarrow{HMi}} = \frac{X}{u\Delta t}$$

De même, les triangles RFiQ et RMH étant semblables, on peut écrire :

$$\frac{\overrightarrow{RFi}}{\overrightarrow{MR}} = \frac{\overrightarrow{QFi}}{\overrightarrow{MH}} = \frac{X}{u\Delta t}$$

c'est à dire que

$$X = \frac{\overrightarrow{RFi}}{\overrightarrow{MR}}.u\Delta t$$

On voit donc que la connaissance, à l'instant $t_i$, des coordonnées dans le plan π des points M, R et Fi, ainsi que de la composante $u$ de la vitesse $\vec{V}$ et de l'intervalle de temps Δt, permet de déterminer la distance X.

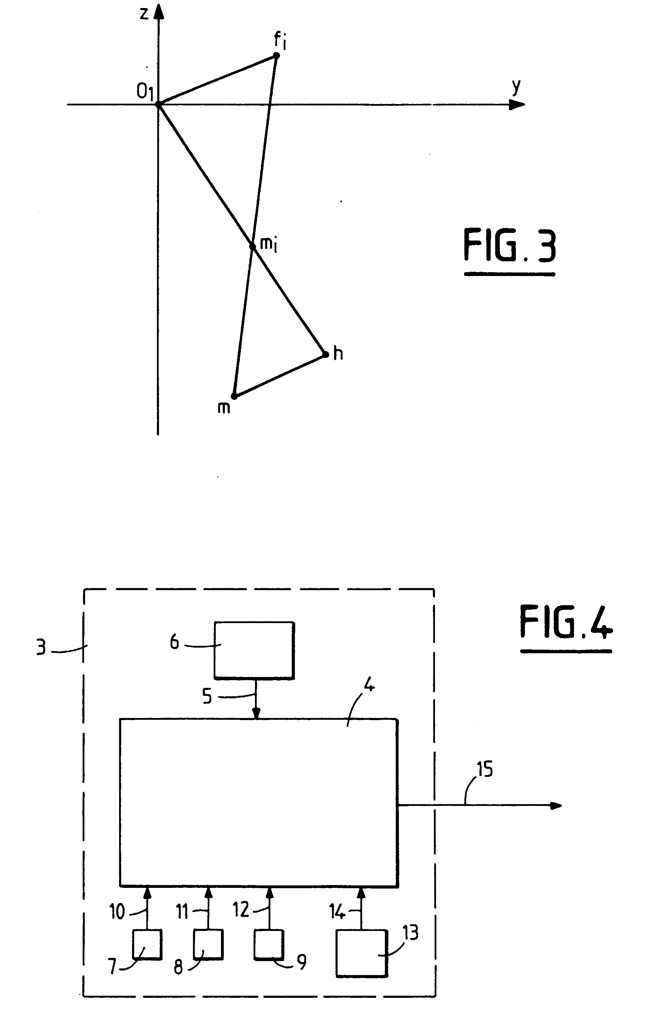

Conformément à l'invention, on effectue le calcul, non pas à partir du plan π précédent, mais à partir du plan image PI parallèle du plan π et coupant l'axe OX au point O1. Par homothétie, les points Q, Fi, R, M et H précédents ont respectivement pour image, dans le plan PI, des points O1, $fi$, $mi$, $m$ et $h$, tel que représenté sur la figure 3. On remarquera que le point $mi$ est à la fois l'image du point R et celle du point Mi.

Des relations précédentes dans le plan π, on en déduit dans le plan PI la relation :

$$X = \frac{\overrightarrow{mifi}}{\overrightarrow{mmi}}.u\Delta t$$

Par conséquent, la connaissance de $\overrightarrow{mifi}$ et de $\overrightarrow{mmi}$, dans le plan image PI, permet de déterminer la coordonnée X du point remarquable M.

Pour déterminer les coordonnées de $\overrightarrow{mifi}$ et de $\overrightarrow{mmi}$, on définit dans le plan image PI un repère (O1y,O1z) tel que O1y et O1z sont respectivement parallèles à OY et OZ.

A partir des coordonnées $y$ et $z$ du point $m$ image du point remarquable M, on en déduit les relations Y = yX/λ et Z = zX/λ, où Y et Z sont les deux autres coordonnées du point M.

En pratique, pour déterminer les coordonnées du vecteur $\overrightarrow{mmi}$, puis celle du vecteur $\overrightarrow{mifi}$, dans le plan image PI à l'instant $t_i$, on utilisera la méthode décrite précédemment en partant des coordonnées du point $m$ à l'instant ti-1 et en effectuant les différentes étapes décrites. Ce qui permet alors d'obtenir, par l'intermédiaire des relations mentionnées, les coordonnées X, Y et Z recherchées du point remarquable M dans ledit référentiel aéronef.

La coordonnée $u$ du vecteur vitesse selon l'axe OX est déterminée par des moyens extérieurs, comme on le verra ci-après, tandis que les coordonnées $v,w$ de ce vecteur vitesse $\vec{V}$ sont déterminées à partir des coordonnées du point d'intersection $fi$ dans le plan image (O1y,O1z), ce point ayant comme coordonnées v/u et w/u. Ainsi, on connaît la position et la vitesse dudit aéronef à un instant donné $t_i$.

Pour la mise en oeuvre du procédé conforme à l'invention, on utilise un dispositif 3 comportant des moyens de calcul 4, tel que représenté sur la figure 4.

Ces moyens de calcul 4 reçoivent, par l'intermédiaire d'une liaison 5, les mesures des coordonnées de l'image $m$ d'un ou de plusieurs points remarquables M déterminées par la mise en oeuvre d'une caméra 6, dirigée selon une orientation fixe par rapport à l'aéronef, vers l'avant.

Ledit dispositif 3 comporte, en outre, des gyromètres 7, 8 et 9 reliés respectivement par des liaisons 10, 11 et 12 auxdits moyens de calcul 4 et transmettant à ces derniers les composantes du vecteur de rotation instantanée de l'aéronef suivant les axes de roulis, de tangage et de lacet.

Par ailleurs, ledit dispositif 3 comporte des moyens 13 pour estimer la vitesse axiale dudit aéronef, qui sont reliés aux moyens de calcul 4 par une liaison 14. Cette vitesse peut, par exemple, être déterminée par une mesure d'accélération donnée par un accéléromètre. Elle peut également être déterminée par le régime de propulsion de l'aéronef et des conditions atmosphériques.

A partir de ces informations, lesdits moyens de calcul 4 déterminent alors, dans un référentiel lié audit aéronef, les coordonnées des points remarquables M du paysage auxquels on s'intéresse, ainsi que les composantes du vecteur vitesse de l'aéronef.

Lesdits moyens de calcul 4 transmettent ces résultats par l'intermédiaire d'une liaison 15.

Ces moyens de calcul 4 peuvent être embarqués à bord de l'aéronef ou peuvent être, au moins partiellement, disposés dans un poste de commande installé au sol.

## Revendications

1. Procédé pour déterminer les positions successives d'un aéronef (A) en mouvement, à chacun des instants d'une pluralité d'instants successifs espacés les uns des autres d'une durée $\Delta t$, en mettant en oeuvre une caméra disposée dans l'axe dudit aéronef (A) et observant le paysage en avant de ce dernier, caractérisé en ce que, à un tel instant $\underline{ti}$ pour lequel l'aéronef (A) occupe une position Pi, dans le plan image (PI) de ladite caméra :

   - on détermine les coordonnées de l'image (m) d'un point remarquable M du paysage ;
   - on détermine les coordonnées de l'image (mi) d'un point fictif Mi, défini par le fait que le vecteur $\overrightarrow{MMi}$ est équipollent au vecteur $\overrightarrow{Pi\text{-}1\,Pi}$, Pi-1 étant la position de l'aéronef à l'instant ti-1 ;
   - on détermine les coordonnées du point d'intersection (fi) entre ledit plan image (PI) et une droite passant par ladite position Pi et parallèle au vecteur vitesse ($\overrightarrow{V}$) dudit aéronef (A), déterminé lors d'une mesure à un desdits instants précédents $\underline{ti}$ ;
   - on détermine la vitesse axiale (u) dudit aéronef (A) ; et
   - à partir desdites coordonnées des images ($\underline{m}$ et $\underline{mi}$) dudit point remarquable M et dudit point fictif Mi et desdites coordonnées dudit point d'intersection (fi), ainsi que de ladite vitesse axiale (u) et de ladite durée $\Delta t$, on calcule, dans un référentiel lié audit aéronef, les coordonnées dudit point remarquable M, ainsi que les composantes dudit vecteur vitesse ($\overrightarrow{V}$), à l'instant $\underline{ti}$.

2. Procédé selon la revendication 1, caractérisé en ce qu'on dispose une matrice de photodétecteurs dans ledit plan image (PI).

3. Procédé selon la revendication 2, caractérisé en ce que, pour déterminer les coordonnées de l'image (m) dudit point remarquable M à l'instant $\underline{ti}$, on commence par mesurer, dans ledit plan image (PI), à l'instant précédent ti-1, les coordonnées de l'image dudit point remarquable M du paysage, puis on intègre l'équation du mouvement de ce point dans le système de référence de l'aéronef pour obtenir une position estimée (m*) de l'image dudit point remarquable à l'instant $\underline{ti}$.

4. Procédé selon la revendication 3, caractérisé en ce que l'on mesure, à bord dudit aéronef, les composantes (p, q et r) du vecteur de rotation instantanée ($\Omega$) suivant les axes de roulis, de tangage et de lacet dudit aéronef et en ce que l'on utilise ledit vecteur de rotation instantanée dans ladite équation de mouvement.

5. Procédé selon l'une quelconque des revendications 3 ou 4, caractérisé en ce que, pour obtenir la position vraie de l'image (m) dudit point remarquable M à l'instant $\underline{ti}$, on mémorise une portion de l'image entourant l'image dudit point remarquable M à l'instant ti-1 et on effectue une corrélation avec une portion d'image autour de la position estimée (m*) en recherchant la position qui donne le maximum de corrélation et qui définit la position vraie de l'image (m) du point remarquable M.

6. Procédé selon l'une quelconque des revendications 3 à 5, caractérisé en ce que, pour déterminer les coordonnées de l'image (mi) dudit point fictif Mi à l'instant $\underline{ti}$, on intègre, connaissant les coordonnées de l'image (m) dudit point remarquable M à l'instant ti-1, une équation de mouvement simplifiée tenant compte du fait que la vitesse dudit point fictif Mi est nulle par rapport à l'aéronef.

7. Procédé selon l'une des revendications 1 à 6, caractérisé en ce que, à partir des coordonnées des images $\underline{m}$ et $\underline{mi}$ dudit point remarquable M et dudit point fictif Mi, on calcule les composantes ($\alpha$ et $\beta$) du vecteur image $\overrightarrow{mmi}$ dans le plan image (PI) de ladite caméra, à l'instant $\underline{ti}$.

8. Procédé selon la revendication 7, caractérisé en ce que, pour déterminer les coordonnées dudit point d'intersection (fi), on détermine au moins deux vecteurs image $\overrightarrow{mmi}$ correspondant à deux points remarquables M différents, et on détermine les coordonnées dudit point d'intersection (fi) comme celles de l'intersection desdits deux vecteurs image $\overrightarrow{mmi}$.

9. Procédé selon la revendication 7,
caractérisé en ce que, pour déterminer les coordonnées dudit point d'intersection (fi), on détermine, connaissant le point d'intersection fi-1 à l'instant ti-1, le point d'intersection (fi) par projection de fi-1 sur $\overrightarrow{mmi}$.

10. Procédé selon l'une des revendications 8 ou 9,
caractérisé en ce que, à partir des coordonnées de l'image $\underline{mi}$ dudit point fictif Mi et du point d'intersection $\underline{fi}$, on calcule les composantes du vecteur $\overrightarrow{mifi}$ dans le plan image de ladite caméra, à l'instant $\underline{ti}$.

11. Procédé selon l'une des revendications 1 à 10,
caractérisé en ce que ladite vitesse axiale (u) dudit aéronef (A) est estimée d'après le régime du propulseur de l'aéronef et des conditions atmosphériques.

12. Procédé selon les revendications 7, 10 et 11,
caractérisé en ce que la distance X séparant, à l'instant $\underline{ti}$, ladite position Pi d'un plan ($\pi$) parallèle au plan image (PI) de la caméra et passant par ledit point remarquable M, est calculée par l'expression :

$$X = [\overrightarrow{mifi}/\overrightarrow{mmi}] \cdot u \cdot \Delta T.$$

13. Dispositif (3) pour déterminer les positions successives d'un aéronef en mouvement, à chacun des instants d'une pluralité d'instants successifs espacés les uns des autres d'une durée $\Delta t$, comportant une caméra (6),
caractérisé :

- en ce que ladite caméra (6) est dirigée, selon une orientation fixe par rapport audit aéronef, vers l'avant, pour détecter un point remarquable du paysage ; et
- en ce que ledit dispositif comporte :

  . des gyromètres (7,8,9) pour mesurer les composantes du vecteur de rotation instantanée dudit aéronef, suivant les axes de roulis, de tangage et de lacet de celui-ci ;
  . des moyens (13) pour estimer la vitesse axiale dudit aéronef ; et
  . des moyens de calcul (4) pour déterminer, dans un référentiel lié audit aéronef, à chacun desdits instants et exclusivement à partir de mesures de coordonnées fournies par ladite caméra, desdites composantes de rotation instantanée, de ladite vitesse axiale et de la durée $\Delta t$, les coordonnées dudit point remarquable, ainsi que les composantes du vecteur vitesse de l'aéronef, à cet instant.

14. Dispositif selon la revendication 13,
caractérisé en ce que lesdits moyens de calcul (4) sont, dans leur totalité, embarqués à bord dudit aéronef.

15. Dispositif selon la revendication 13,
caractérisé en ce qu'une liaison de transmission est prévue entre ledit aéronef et un poste de commande au sol et en ce que lesdits moyens de calcul sont, au moins partiellement, disposés dans ledit poste de commande.

## Patentansprüche

1. Verfahren zur Bestimmung der aufeinanderfolgenden Standorte eines in Bewegung befindlichen Luftfahrzeugs (A) zu jedem der Zeitpunkte einer Vielzahl aufeinanderfolgender Zeitpunkte, die voneinander durch eine Dauer $\Delta t$ getrennt sind, durch Einsatz einer Kamera in der Achse des Luftfahrzeugs (A) zur Beobachtung der Landschaft vor demselben, dadurch gekennzeichnet, daß zu einem Zeitpunkt $\underline{ti}$, in dem das Luftfahrzeug (A) einen Standort Pi einnimmt, in der Bildebene (PI) der Kamera:

- die Koordinaten der Abbildung (m) eines auffälligen Punktes M der Landschaft bestimmt werden;
- die Koordinaten der Abbildung (mi) eines fiktiven Punktes Mi bestimmt werden, der sich dadurch ergibt, daß der Vektor $\overrightarrow{MMi}$ mit dem Vektor $\overrightarrow{Pi\text{-}1\,Pi}$ logisch gleichwertig ist, wobei Pi-1 der Standort des Luftfahrzeugs zum Zeitpunkt ti-1 ist;
- die Koordinaten des Schnittpunktes (fi) zwischen der Bildebene (PI) und einer Geraden bestimmt werden, die durch den Standort Pi parallel zum Geschwindigkeitsvektor ($\bar{V}$) des Luftfahrzeugs (A) verläuft, der bei einer Messung zu einem der obigen Zeitpunkte $\underline{ti}$ bestimmt wird;
- die axiale Geschwindigkeit (u) des Luftfahrzeugs (A) bestimmt wird und
- aus den Koordinaten der Abbildungen ($\underline{m}$ und $\underline{mi}$) des auffälligen Punktes M und des fiktiven Punktes Mi und den Koordinaten des Schnittpunktes (fi) sowie der axialen Geschwindigkeit (u) und der Dauer $\Delta t$ in einem luftfahrzeugfesten Bezugssystem die Koordinaten des auffälligen Punktes M sowie die Komponenten des Geschwindigkeitsvektors ($\vec{V}$) zum Zeitpunkt $\underline{ti}$

errechnet werden.

**2.** Verfahren nach Anspruch 1,
dadurch gekennzeichnet, daß in der Bildebene (PI) eine Photodetektormatrix angeordnet wird.

**3.** Verfahren nach Anspruch 2,
dadurch gekennzeichnet, daß zur Bestimmung der Koordinaten der Abbildung (m) des auffälligen Punktes M zum Zeitpunkt $t_i$ zunächst in der Bildebene (PI) die Koordinaten der Abbildung des auffälligen Landschaftspunktes M zum vorangegangenen Zeitpunkt ti-1 bestimmt werden und dann die Gleichung für die Bewegung dieses Punktes in das Bezugssystem des Luftfahrzeugs integriert wird, um einen geschätzten Standort (m*) der Abbildung des auffälligen Punktes zum Zeitpunkt $t_i$ zu erhalten.

**4.** Verfahren nach Anspruch 3,
dadurch gekennzeichnet, daß an Bord des Luftfahrzeugs die Komponenten (p, q und r) des augenblicklichen Rotationsvektors ($\Omega$) nach der Roll-, Nick- und Gierachse des Luftfahrzeugs gemessen werden, und dadurch, daß der augenblickliche Rotationsvektor in der Bewegungsgleichung genutzt wird.

**5.** Verfahren nach einem der Ansprüche 3 oder 4,
dadurch gekennzeichnet, daß zum Erhalt des tatsächlichen Standorts der Abbildung (m) des auffälligen Punktes M zum Zeitpunkt $t_i$ ein Bildabschnitt um die Abbildung des auffälligen Punktes M zum Zeitpunkt ti-1 gespeichert und eine Korrelation mit einem Bildabschnitt um den geschätzten Standort (m*) vorgenommen wird, wobei der Standort mit der maximalen Korrelation ermittelt wird, der den tatsächlichen Standort der Abbildung (m) des auffälligen Punktes M angibt.

**6.** Verfahren nach einem der Ansprüche 3 bis 5,
dadurch gekennzeichnet, daß zur Bestimmung der Koordinaten der Abbildung (mi) des fiktiven Punktes Mi zum Zeitpunkt $t_i$ bei bekannten Koordinaten der Abbildung (mi) des auffälligen Punkts M zum Zeitpunkt ti-1 eine vereinfachte Bewegungsgleichung unter Berücksichtigung der Tatsache eingeführt wird, daß die Geschwindigkeit des fiktiven Punktes Mi gegenüber dem Luftfahrzeug Null ist.

**7.** Verfahren nach einem der Ansprüche 1 bis 6,
dadurch gekennzeichnet, daß aus den Koordinaten der Abbildungen $\underline{m}$ und $\underline{mi}$ des auffälligen Punktes M und des fiktiven Punktes Mi die Komponenten ($\alpha$ und $\beta$) des Abbildungsvektors $\overrightarrow{mmi}$ in der Bildebene (PI) der Kamera zum Zeitpunkt $t_i$ berechnet werden.

**8.** Verfahren nach Anspruch 7,
dadurch gekennzeichnet, daß zur Bestimmung der Koordinaten des Schnittpunktes (fi) mindestens zwei Abbildungsvektoren $\overrightarrow{mmi}$ für zwei unterschiedliche auffällige Punkte M und die Koordinaten des Schnittpunktes (fi) wie auch des Schnittpunktes der beiden Abbildungsvektoren $\overrightarrow{mmi}$ bestimmt werden.

**9.** Verfahren nach Anspruch 7,
dadurch gekennzeichnet, daß zur Bestimmung der Koordinaten des Schnittpunktes (fi) bei bekanntem Schnittpunkt fi-1 zum Zeitpunkt ti-1 der Schnittpunkt (fi) durch Projektion von fi-1 auf $\overrightarrow{mmi}$ bestimmt wird.

**10.** Verfahren nach einem der Ansprüche 8 oder 9,
dadurch gekennzeichnet, daß aus den Koordinaten der Abbildung $\underline{mi}$ des fiktiven Punktes Mi und des Schnittpunktes $\underline{fi}$ die Komponenten des Vektors $\overrightarrow{mifi}$ in der Bildebene der Kamera zum Zeitpunkt $t_i$ errechnet werden.

**11.** Verfahren nach einem der Ansprüche 1 bis 10,
dadurch gekennzeichnet, daß die axiale Geschwindigkeit (u) des Luftfahrzeugs (A) nach der Antriebsgeschwindigkeit des Luftfahrzeugs und den Witterungsbedingungen geschätzt wird.

**12.** Verfahren nach den Ansprüchen 7, 10 und 11, . dadurch gekennzeichnet, daß die Entfernung X zum Zeitpunkt $t_i$ zwischen dem Standort Pi und einer parallel zur Bildebene (PI) der Kamera durch den auffälligen Punkt M verlaufenden Ebene ($\pi$) durch den Ausdruck

$$X = [\overrightarrow{mifi}/\overrightarrow{mmi}] \, . \, u \, . \, \Delta T$$

berechnet wird.

**13.** Vorrichtung (3) mit einer Kamera (6) zur Bestimmung der aufeinanderfolgenden Standorte eines in Bewegung befindlichen Luftfahrzeugs zu jedem der Zeitpunkte einer Vielzahl aufeinanderfolgender Zeitpunkte, die voneinander durch eine Dauer $\Delta t$ getrennt sind,
dadurch gekennzeichnet:

- daß die Kamera (6) zur Erfassung eines auffälligen Landschaftspunktes fest gegenüber dem Luftfahrzeug nach vorne gerichtet ist und
- daß die Vorrichtung umfaßt:

  . Wendekreisel (7,8,9) zum Messen der Komponenten des augenblicklichen Rotationssvektors des Luftfahrzeugs nach seiner Roll-, Nick- und Gierachse;
  . Mittel (13) zur Bewertung der axialen Geschwindigkeit des Luftfahrzeugs und
  . Rechenmittel (4), mit denen in einem luftfahrzeugfesten Bezugssystem zu jedem Zeitpunkt ausschließlich nach Koordinatenmessungen der Kamera, nach den augenblicklichen Rotationskomponenten, der axialen Geschwindigkeit und der Dauer $\Delta t$ die Koordinaten des auffälligen Punktes sowie die Komponenten des Geschwindigkeitsvektors des Luftfahrzeugs zu diesem Zeitpunkt bestimmt werden.

14. Vorrichtung nach Anspruch 13,
dadurch gekennzeichnet, daß sich die Rechenmittel (4) insgesamt an Bord des Luftfahrzeugs befinden.

15. Vorrichtung nach Anspruch 13,
dadurch gekennzeichnet, daß zwischen dem Luftfahrzeug und einer Bodenstation eine Übertragungsverbindung besteht und daß sich die Rechenmittel zumindest teilweise in der Bodenstation befinden.

**Claims**

1. Method of determining the successive positions of a moving aircraft (A) at each of a plurality of successive times spaced by a time period $\Delta t$, using a video camera disposed on the axis of said aircraft (A) and observing the terrain ahead of the latter, characterised in that, at a time $t_i$ at which the aircraft (A) occupies a position Pi in the image plane (PI) of said video camera:

   - the coordinates of the image (m) of a remarkable point M of the terrain are determined;
   - the coordinates of the image ($m_i$) of an imaginary point Mi are determined, said imaginary point being defined by the fact that the vector $\overrightarrow{M\,Mi}$ is equipollent with the vector $\overrightarrow{Pi\text{-}1\,Pi}$, Pi-1 being the position of the aircraft at time $t_{i-1}$;
   - the coordinates of the point of intersection ($f_i$) between said image plane (PI) and a straight line segment passing through said position Pi and parallel to the speed vector ($\vec{V}$) of said aircraft (A), determined at the time of a measurement at one of said preceding times $t_i$, are determined;
   - the axial speed (u) of said aircraft (A) is determined; and
   - from said coordinates of the images (m and $m_i$) of said remarkable point M and said imaginary point Mi and said coordinates of said point of intersection ($f_i$), and from said axial speed (u) and said time period $\Delta t$, the coordinates of said remarkable point M and the components of said speed vector ($\vec{V}$) in a frame of reference fixed relative to said aircraft at time $t_i$ are computed.

2. Method according to claim 1,
characterised in that a matrix array of photodetectors is disposed in said image plane (PI).

3. Method according to claim 2,
characterised in that, to determine the coordinates of the image (m) of said remarkable point M at time $t_i$, the coordinates of the image of said remarkable point M of the terrain are first measured in said image plane (PI) at the preceding time $t_{i-1}$, after which the equation of movement of said point in the frame of reference of the aircraft is integrated to obtain an estimated position (m*) of the image of said remarkable point at time $t_i$.

4. Method according to claim 3,
characterised in that the components (p, q and r) of the instantaneous rotation vector ($\Omega$) about the roll, pitch and yaw axes of said aircraft are measured on board said aircraft and said instantaneous rotation vector is used in said equation of movement.

5. Method according to claim 3 or claim 4,
characterised in that, to obtain the true position of the image (m) of said remarkable point M at time $t_i$, a portion of the image around the image of said remarkable point M is memorised at time $t_{i-1}$ and correlated with an image portion around the estimated position (m*) in order to determine the position that gives the maximum correlation and that defines the true position of the image (m) of the remarkable point (M).

6. Method according to any one of claims 3 to 5,
characterised in that, to determine the coordinates of the image ($m_i$) of said imaginary point Mi at time $t_i$, knowing the coordinates of the image (m) of said remarkable point M at time $t_{i-1}$, a simplified equation of movement allowing for the fact that said speed of said imaginary point Mi relative to the aircraft is zero is integrated.

7. Method according to any one of claims 1 to 6,
characterised in that, from the coordinates of the images $\underline{m}$ and $m_i$ of said remarkable point M and of said imaginary point Mi, the components ($\alpha$ and $\beta$) of the image vector $\overrightarrow{mm_i}$ in the image plane (PI) of said video camera at time $t_i$ are computed.

8. Method according to claim 7,
characterised in that, to determine the coordinates of said point of intersection ($f_i$), at least two image vectors $\overrightarrow{mm_i}$ are determined corresponding to two different remarkable points M, and the coordinates of said point of intersection ($f_i$) are determined as those of the intersection of said two image vectors $\overrightarrow{mm_i}$.

**9.** Method according to claim 7, characterised in that, to determine the coordinates of said point of intersection ($f_i$), knowing the point of intersection $f_{i-1}$ at time $t_{i-1}$, the point of intersection ($f_i$) is determined by projecting $f_{i-1}$ onto $\overrightarrow{mm_i}$.

**10.** Method according to claim 8 or claim 9, characterised in that, from the coordinates of the image $m_i$ of said imaginary point Mi and of the point of intersection $f_i$, the components of the vector $\overrightarrow{m_if_i}$ in the image plane of said video camera at time $t_i$ are computed.

**11.** Method according to any one of claims 1 to 10, characterised in that said axial speed (u) of said aircraft (A) is estimated from the operating conditions of the propulsion unit of the aircraft and from the atmospheric conditions.

**12.** Method according to claims 7, 10 and 11, characterised in that the distance X at time $t_i$ between said position Pi and a plane ($\pi$) parallel to the image plane (PI) of the video camera and passing through said remarkable point M is calculated from the equation:

$$X = [\overrightarrow{m_if_i} / \overrightarrow{m\,m_i}] .u.\Delta T.$$

**13.** Device (3) for determining the successive positions of a moving aircraft at each of a plurality of successive times spaced by a time period $\Delta t$, including a video camera (6), characterised in that:

- said video camera (6) is directed towards the front with an orientation fixed relative to said aircraft to detect a remarkable point of the terrain; and
- said device includes:

  . rate gyroscopes (7, 8, 9) for measuring the components of the instantaneous rotation vector of said aircraft about its roll, pitch and yaw axes;
  . means (13) for estimating the axial speed of said aircraft; and
  . computation means (4) for determining, in a frame of reference fixed relative to said aircraft, at each of said times and exclusively on the basis of measured coordinates supplied by said video camera, said instantaneous rotation components, said axial speed and the time period $\Delta t$, the coordinates of said remarkable point and the components of the speed vector of the aircraft at said time.

**14.** Device according to claim 13, characterised in that said computation means (4) are all on board said aircraft.

**15.** Device according to claim 13, characterised in that a transmission link is provided between said aircraft and a control station on the ground and in that at least some of said computation means are disposed in said control station.

# FIG.1

# FIG.2

FIG.3

FIG.4